Europäisches Patentamt

European Patent Office

Office européen des brevets

(11) Publication number: **0 178 691**
**B1**

## EUROPEAN PATENT SPECIFICATION

(45) Date of publication of patent specification: **05.12.90**

(21) Application number: **85200545.3**

(22) Date of filing: **09.04.85**

(51) Int. Cl.⁵: **G 09 B 9/04**

(54) Motor-vehicle driving simulator.

(30) Priority: **16.10.84 IT 6801784**

(43) Date of publication of application:
**23.04.86 Bulletin 86/17**

(45) Publication of the grant of the patent:
**05.12.90 Bulletin 90/49**

(84) Designated Contracting States:
**AT BE CH DE FR GB LI NL SE**

(56) References cited:
**CH-A- 176 658**
**GB-A- 984 816**
**US-A-3 071 874**
**US-A-3 171 215**
**US-A-4 150 497**

(73) Proprietor: **Bradascio, Giacomo**
**via M. Pagano 3**
**I-75100 Matera (IT)**

(72) Inventor: **Bradascio, Giacomo**
**via M. Pagano 3**
**I-75100 Matera (IT)**

(74) Representative: **Chiappero, Riccardo et al**
**Corso Re Umberto 56**
**I-10128 Torino (IT)**

Courier Press, Leamington Spa, England.

## Description

This invention relates to a motor-vehicle driving simulator, particularly for teaching purposes.

Driving simulators are known where some of the typical manoeuvres involved in driving a motor-vehicle are recreated by means of electrical and electronic devices receiving their inputs from controls operated by the learner. US—A—3 171 215 shows, for instance, an apparatus comprising an endless belt display showing the picture of a winding road, a steering wheel adapted to displace a pointer in front of the display, and an accelerator and a brake pedal for varying the speed of the belt, while no provision is made for simulation of the clutch and gearshift.

Such known simulators are unable to give a true or realistic replica of the actual conditions of operation of the controls, and in particular they fail to train the learner in the coordination of the commands, so that their effectiveness is small or nonexistent for the purposes of learning.

More particularly, prior simulators do not give the learner an accurate feeling of the efforts and displacements required for operating the gearbox lever and the clutch, brake and accelerator pedals, or the force required for turning the steering wheel. Consequently, when the learner starts taking practical motoring lessons aboard a real motor-vehicle, he not only fails to take advantage of his previous experience at the simulator, but he often turns out to have acquired wrong habits, which hamper learning and cause harmful stresses to the motor-vehicle.

A device for teaching the learner in the use and coordination of the clutch and gearshift is disclosed in US—A—4 150 497, though this is not a simulator but rather an attachment for a motor-vehicle running in actual road situations, so that it can only be used for advanced training of an already skilled driver, not for teaching the rudiments of driving.

It is not feasible to improve the known simulators in order to more truly reproduce the behaviour of a real motorcar, because the sophistication involved would push design and manufacture costs to levels unacceptable for commercial production.

The invention therefore has as its main object to provide a motor-vehicle driving simulator where the main motoring controls are realistic in contrast to being reproduced with uncertain approximation, so that the learner will find, in actual motoring on a motorcar, an exact match with the manoeuvres that he has learnt at the simulator, while maintaining costs of design and manufacture that are moderate and even lower than for known simulators.

A further object is to provide a simulator by which real traffic situations can be reproduced, the learner having to react with appropriate manoeuvres, without causing the simulator to stop.

In order to achiveve the above and other objects, such as will appear from the following detailed specification, this invention provides a motor-vehicle driving simulator, particularly for teaching purposes, having the features defined in claim 1.

Further features and advantages will appear from the following detailed disclosure, with reference to the attached drawings, given by way of non-limiting example, and wherein:

Fig. 1 is a perspective view, partly broken away, of a simulator according to the invention;

Fig. 2 is a perspective view showing a detail of an engine unit belonging to the simulator of Fig. 1 and of a driving electric motor therefor;

Fig. 3 is a perspective view showing another detail of the engine unit;

Fig. 4 is a mechanical diagram of the complete simulator;

Fig. 5 is an electrical block diagram of a controlled supply unit for the motor;

Fig. 6 is a detail of the diagram of Fig. 5;

Fig. 7 is a block diagram of a logic circuit controlling said supply unit;

Fig. 8 is a detailed electric diagram of said logic circuit.

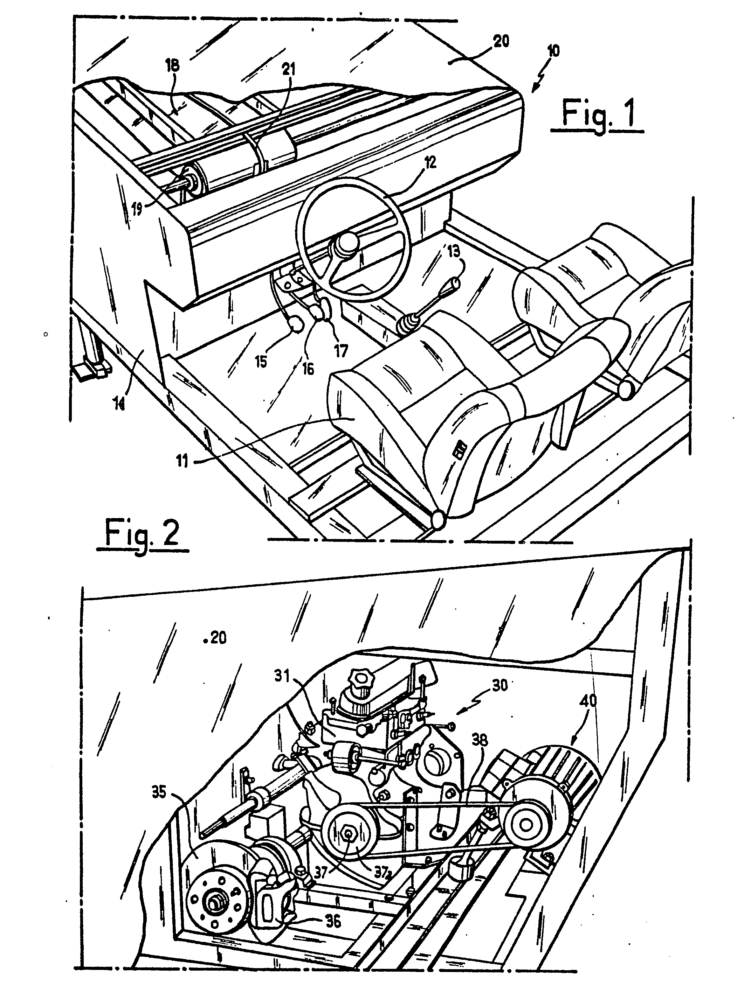

With reference to Figs. 1 to 4, a simulator referenced with 10 comprises a stationary frame 14 in which a driver's seat 11 is provided. The stationary frame also supports a rotary steering wheel 12, a gearbox lever 13, and a set of pedals comprising: a clutch pedal 15, a brake pedal 16 and an accelerator pedal 17. A boot 20 mounted on the stationary frame in front of the driver's seat accommodates a pair of rollers (of which only roller 19 is visible in the Figures) around which a ribbon 18 is looped. The ribbon is placed for comfortable viewing through a window from the driver's seat. A road course, with possible obstacles, is marked in contrasting colours on the ribbon.

A pointer 21, driven by the steering wheel 12, is displaceable across the ribbon in order to follow the road course as this winds before the driver while the ribbon unrolls, as it will be explained later. A light detector (not shown) is mounted on pointer 21 for sensing the course traced on the ribbon and for energizing a light or sound alarm whenever the learner, by incorrectly operating the steering wheel, allows the pointer to stray from the course.

An engine unit 30 of a real motorcar is housed in the front boot 20 and comprises an internal combustion engine 31 (or at least its crankcase) with its crankshaft 37, gearbox 32, a friction clutch 29 coupled between the engine and the gearbox, and a differential gear adapted to transmit a rotary motion from the gearbox output to respective right-hand and left-hand axle shafts 33 and 34, including their brakes comprising disks 35 and hydraulic shoes 36.

Engine unit 30 is preferably taken from a front-wheel drive motorcar, so that all or most of the above mechanical members are housed within a single block. The engine unit 30 is preferably recovered from damaged or unserviceable motorcars, and is stripped of any superfluous members such as cranks, pistons or valves, in order to reduce the power required for turning crankshaft 37, as explained below.

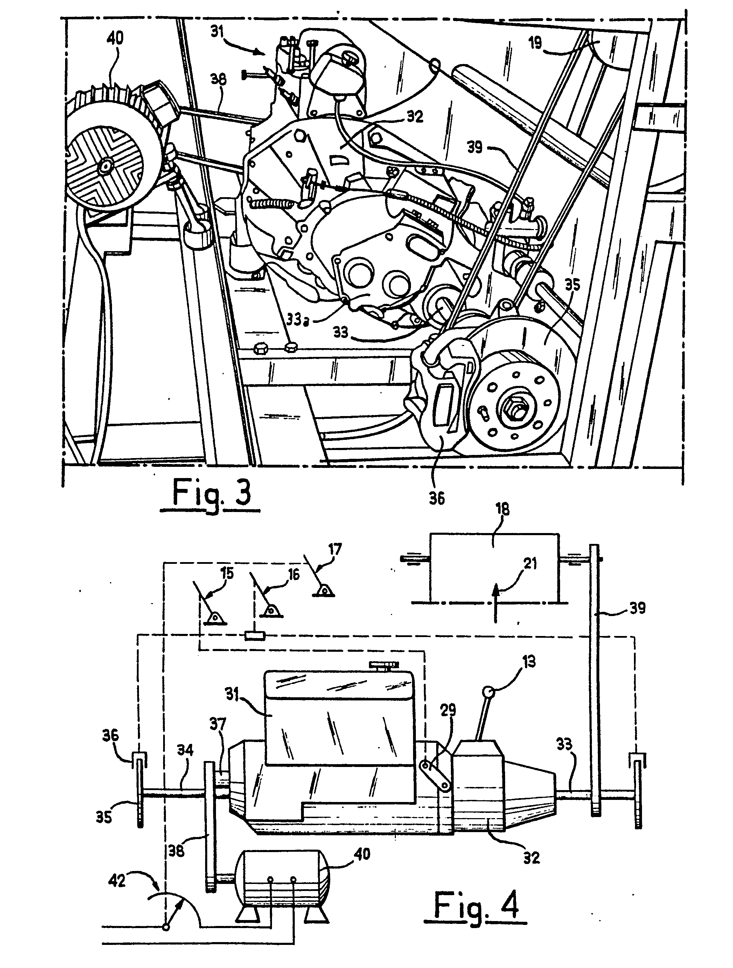

As shown in the mechanical diagram of Fig. 4, crankshaft 37 has a pulley 37a that is driven by an electric motor 40, by means of a belt transmission 38. Another belt transmission 39 connects one of the axle shafts 33 with roller 19, in order to drive the ribbon synchronously with the output speed of the gearbox.

Clutch pedal 15 is operatively connected to the control member of clutch 29, and brake pedal 16 is operatively connected to the braking system, by means of conventional couplings, substantially the same as in a real motorcar. The accelerator pedal 17 operates a rheostatic speed regulator 42, adapted to vary the supply voltage to motor 40. Regulator 42 could also be of any other type, depending on the motor chosen.

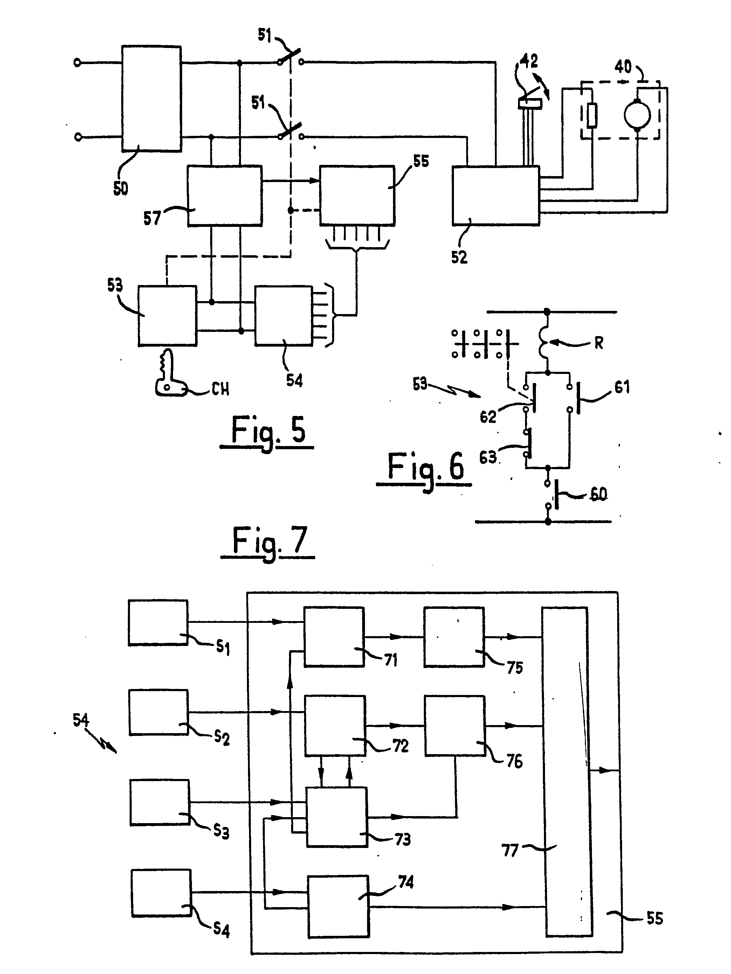

The block diagram of Fig. 5 shows a supply unit for motor 40. The supply voltage at terminals V is applied, through a differential overload relay 50, to contacts 51 of a power relay R (also see Fig. 6), through which the rheostatic regulator 52 is energized. Overload relay 50 also energizes a low-voltage, d.c. supply unit 57. The latter supplies: a lock-operated switching unit 53, controlling the energeization of power relay R, and adapted to be operated by an ignition key CH; power relay R; a set of position-detectors 54 for detecting the position of the controls; and a logic circuit 55 adapted to disable the supply according to the states of said position-detectors.

Fig. 6 shows switching unit 53 in detail. A first (bistable) contact 60 connected in series with power relay R is closed by a first step of the ignition key CH; a second (monostable) series contact 61 is closed by the second step of said key (with spring back). Two series-connected contacts, i.e. a holding contact 62, and a blocking contact 63 controlled by logic circuit 55, are connected in parallel with contact 61.

The simulator has a logic circuit 55 controlling the motor according to the following functions:

prevent motor 40 from being started while a gear is engaged in the gearbox and clutch 29 is engaged;

disable the supply to motor 40 if the gearbox lever is operated while the clutch is engaged;

disable the supply to motor 40 if the clutch pedal is released too quickly while a gear is engaged;

disable the supply to motor 40 if the crankshaft rotation speed falls below a predetermined threshold.

Logic circuit 55 is shown in Fig. 7, and comprises: input stages 71 to 74, driven by respective detectors S1 to S4 of the set 54; a pair of flip-flops 75 and 76 for storing the states of detectors S1 to S4 and a logic gate 77 driven by said detector states for opening contact 63 and thereby de-energizing power relay R (e.g. via an interface transistor and a corresponding block relay, not shown), when one of the conditions listed in the preceding paragraph becomes true.

Detectors S1 to S4 have the following functions:

S1 detects the home position of clutch pedal 15;

S2 detects the depressed position of clutch pedal 15;

S3 detects the neutral position of the gearbox lever 13;

S4 detects the low speed threshold of motor 40.

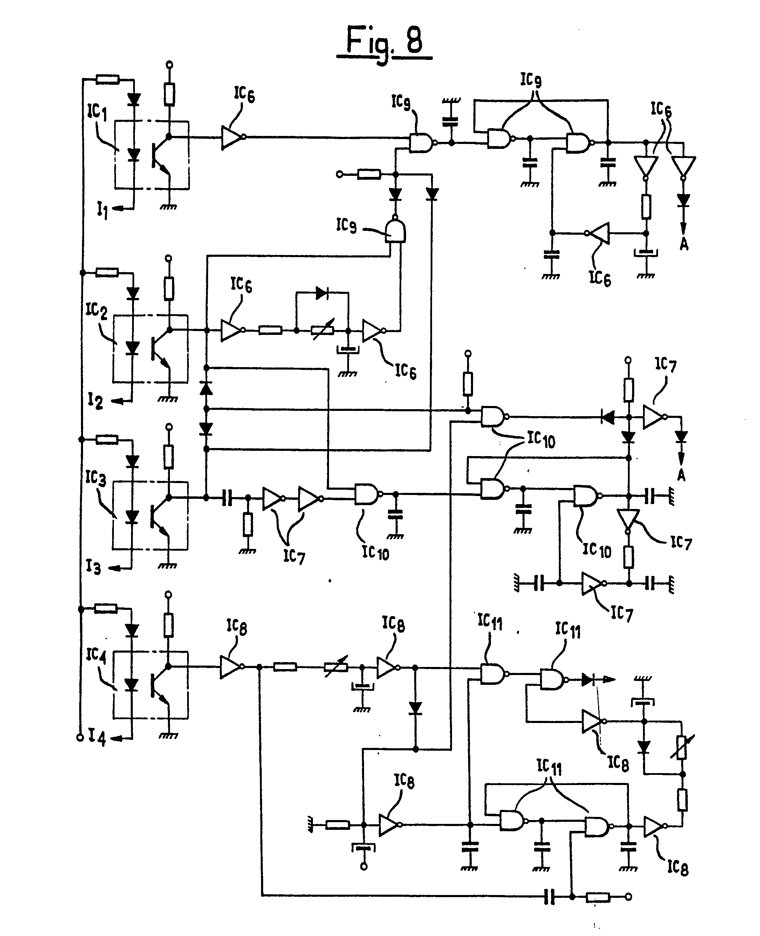

Fig. 8 is a detailed electric diagram of a preferred embodiment of logic circuit 55, which should be immediately intelligible to a person skilled in the art, based on the above explanation. Inputs I1 to I4 from detectors S1 to S4 are coupled to the rest of the circuit by means of optocouplers IC1 to IC4. Outputs A are connected in parallel to the base of an interface transistor (not shown) for operation of the block relay.

By way of example, the commercial identifications of most of the parts included in the circuit of Fig. 8 are given below:

| Part | Commercial name |
|------|-----------------|
| IC1 to IC4 | Fairchild FCD 820 |
| IC5 to IC8 | Motorola MC 14584 |
| IC9 to IC11 | Motorola MC 14011 |

Of course, the circuit could be made with other, equivalent parts, possibly comprising chips of a higher integration level.

The practical details of the simulator could be changed to a large extent with respect to the embodiment disclosed and shown in the drawings by way of non-limiting example. In particular, the display means embodied in the ribbon might be replaced by a television monitor such as a cathode ray tube driven by a pre-recorded television signal, for displaying a desired road course.

## Claims

1. A motor-vehicle driving simulator, particularly for teaching purposes, having a stationary frame supporting a driver's seat (11) and a steering wheel (12), display means (18, 19) mounted on the frame in front of the driver's seat for displaying a changing road course, a pointer (21) adapted to be displaced across the road course by means of the steering wheel, an alarm activated if the pointer strays off said road course, and an acclerator pedal (17), characterized in that the simulator further comprises:

a) a motor-vehicle engine unit (30) including at least a crankcase (31), a crankshaft (37) rotarily supported in the crankcase, a gearbox (32) controlled by a gearbox lever (32), a friction clutch (29) connected between the crankshaft and the lever and controlled by a clutch pedal (15), and a differential gear (33a) driven from the gearbox and having output axle shafts (33, 34) provided with brakes (35, 36) operated by a brake pedal (16), and

b) electric motor means (38, 40) connected to drive the crankshaft and energized by a supply unit (50, 51, 53, 57) including a speed regulator (52) controllable by said accelerator pedal for varying the speed of the motor means.

2. The simulator of claim 1, characterized in that the supply unit includes a power relay (R) and a set of contacts (60, 61, 62, 63) for energizing the relay; and in that a lock-operated switch (53) and a combinatorial circuit (55) controlled by a plurality of detectors (S1 to S4) sensitive to desired positions of the clutch pedal and gearbox lever and to a minimum threshold speed of the crankshaft drive the contacts so that the relay is disabled for desired combinations of said positions.

3. The simulator of claim 2, characterized in that the plurality of detectors comprises a first detector (S1) for sensing the home position of the clutch pedal; a second detector (S2) for sensing the depressed position of the clutch pedal; a third detector (S3) for sensing the neutral position of the gearbox lever; and a fourth detector (S4) for sensing a predetermined low speed threshold of the crankshaft.

4. The simulator of claim 3, characterized in that the said combinatorial circuit is adapted to:

a) prevent the electric motor 40 from being started while a gear is engaged in the gearbox and clutch is engaged;

b) disable the supply unit if the gearbox lever is operated while the clutch is engaged;

c) disable the supply unit if the clutch pedal is released too quickly while a gear is engaged;

d) disable the supply unit if the turning speed of the crankshaft falls below a predetermined low speed threshold.

**Patentansprüche**

1. Kraftfahrzeugfahrsimulator, insbesondere für Schulungszwecke, mit einem festen Rahmen als Halterung für den Fahrersitz (11) und das Lenkrad (12), Anzeigevorrichtungen (18, 19) auf dem Rahmen gegenüber dem Fahrersitz eingebaut, um eine wechselnde Fahrtrichtung anzuzueigen, einem Zeiger (21), der durch die Fahrtrichtung mittels des Lenkrads verschoben wird, einer Alarmvorrichtung, die dann betätigt wird, wenn der Zeiger von der o.g. Fahrtrichtung abweicht, und einem Gaspedal (17), dadurch gekennzeichnet, daß der Fahrtsimulator ausserdem umfasst:

a) eine Kraftfahrzeugmotoreinheit (30) mit mindestens einem Kurbelgehäuse (31), einer in dem Kurbelgehäuse drehgelagerten Kurbelwelle (37), einem von einem Getriebeschalthebel (32) gesteuerten Getriebe (32), einer zwischen der Kurbelwelle und dem Schalthebel eingebauten Reibungskupplung (29), von einem Kupplungspedal (15) gesteuert, und einem Differentialgetriebe (33a), von dem Getriebe aus gesteuert, das über Achswellen (33, 34) mit von einem Bremspedal (16) betätigten Bremsen (35, 36) verfügt; und

b) elektrische Motormittel (38, 40), angeschlossen, um die Kurbelwelle zu steuern und von einer Speiseeinheit (50, 51, 53, 57) mit Strom versorgt einschl. eines Drehzahlreglers (52), der von dem o.g. Gaspedal gesteuert werden kann, um die Geschwindigkeit der Motormittel zu ändern.

2. Fahrtsimulator gemäß Anspruch 1, durch folgendes gekennzeichnet: die Speiseeinheit umfasst ein Leistungsrelais (R) und eine Kontaktreihe (60, 61, 62, 63) zur Versorgung des Relais; ein Schlüsselschalter (53) und eine kombinatorische Schaltung (55), von einer Mehrzahl von Sensoren (S1 bis S4), die gegen die gewünschten Stellungen des Kupplungspedals und des Schalthebels sowie gegen eine Mindestgeschwindigkeitsgrenze der Kurbelwelle empfindlich sind, steuern die Kontakte, sodaß das Relais für gewünschte Kombinationen der o.g. Stellungen deaktiviert ist.

3. Fahrtsimulator gemäß Anspruch 2, durch folgendes gekennzeichnet: die Mehrzahl der Sensoren umfasst einen ersten Sensor (S1) zur Aufnahme der Kupplungspedalruhestellung; einen zweiten Sensor (S2) zur Aufnahme der niedergetretenen Kupplungspedalstellung; einen dritten Sensor (S3) zur Aufnahme der Neutralstellung des Getriebeschalthebels; und einen vierten Sensor (S4) zur Aufnahme einer vorbestimmten Mindestgeschwindigkeitsgrenze der Kurbelwelle.

4. Fahrtsimulator gemäß Anspruch 3, durch folgendes gekennzeichnet: die kombinatorische Schaltung ist für folgendes vorgesehen:

a) sie verhindert, daß die elektrischen Motormittel mit eingeschaltetem Gang und eingeschalteter Kupplung gestartet werden;

b) sie deaktiviert die Speiseeinheit, wenn das Getriebe mit eingeschalteter Kupplung in Betrieb gesetzt wird;

c) sie deaktiviert die Speiseeinheit, wenn das Kupplungspedal mit eingeschaltetem Gang zu schnell losgelassen wird;

d) sie deaktiviert die Speiseeinheit, ween die Drehgeschwindigkeit der Kurbelwelle unter die o.g. vorbestimmte Mindestgeschwindigkeitsgrenze sinkt.

**Revendications**

1. Simulateur de conduite de véhicule à moteur, destiné en particulier à l'enseignement, présentant un châssis fixe supportant un siège de conducteur (11) et un volant (12), des affichages (18, 19) montés sur le châssis face au siège du conducteur pour visualiser un parcours changeant de route, un indicateur (21) capable d'être déplacé à travers le parcours de la route à l'aide du volant, un avertisseur qui est activé lorsque l'indicateur sort du parcours de la route et une pédale d'accélératuer (17), caractérisé par le fait que le simulateur comprend également:

a) un moteur de véchicule (30) comprenant au moins un bloc-moteur (31), un vilebrequin (37) supporté dans sa rotation par le bloc-moteur, une boîte de vitesses (32) commandée par un levier de sélection des rapports (32), un embrayage (29) relié entre le vilebrequin et le levier et commandé par une pédale d'embrayage (15), et un différentiel (33a) entraîné à partir de la boîte de vitesses et équipé d'arbres de roue (33, 34) munis de freins (35, 36) actionnés par une pédale de frein (16); et

b) moyens moteurs électriques (38, 40) branchés de manière à commander l'arbre à cames et alimentés par une unité d'alimentation (50, 51, 53, 57) comprenant un régulateur de vitesses (52) contrôlé par la pédale d'accélérateur pour varier la vitesse des instruments du moteur.

2. Simulateur selon la revendication 1, caractérisé par le fait que l'unité d'alimentation comprend un relais de puissance (R) et une série de contacts (60, 61, 62, 63) pour alimenter le relais; et par le fait qu'un commutateur à blocage (53) et un circuit combinatoire (55) contrôlé par une pluralité de détecteurs (S1 à S4) sensibles aux positions désirées de la pédale d'embrayage et du levier de la boîte de vitesses et à une vitesse de seuil minimale du vilebrequin, commandent les contacts de façon que le relais est désactivé pour les combinaisons désirées de ces positions.

3. Simulateur selon la revendication 2, caractérisé par le fiat que la pluralité des capteurs comprend un premier capteur (S1) pour détecter la position de repos de la pédale d'embrayage; un deuxième capteur (S2) pour détecter la position enfoncée de la pédale d'embrayage; un troisième capteur (S3) pour détecter la position au point mort du levier de sélection des vitesses et un quatrième capteur (S4) pour détecter un seuil prédéterminé de basse vitesse du vilebrequin.

4. Simulateur selon la revendication 3, caractérisé par le fait que le circuit combinatoire est adapté de façon à:

a) empêcher la mise en route des instruments du moteur électrique lorsqu'une vitesse est engagé et l'embrayage enclenché;

b) désactiver l'unite d'alimentation lorsque le levier de selection des vitesses est actionné avec l'embrayage enclenché;

c) désactiver l'unité d'alimentation lorsque la pedale d'embrayage est lâchée trop rapidement lorsqu'une vitesse est engagée;

d) désactiver l'unité d'alimentation lorsque la vitesse de rotation du vilebrequin tombe aus-dessous du seuil prédeterminé de basse vitesse.

Fig. 1

Fig. 2

Fig. 3

Fig. 4

Fig. 5

Fig. 6

Fig. 7

# Fig. 8